Europäisches Patentamt

**European Patent Office**

Office européen des brevets

(19)

(11) Numéro de publication: **0 092 494**
A1

# (12) DEMANDE DE BREVET EUROPEEN

(21) Numéro de dépôt: 83450009.2

(22) Date de dépôt: 19.04.83

(51) Int. Cl.³: **B 01 F 15/00,** A 01 C 3/02,
B 01 F 7/16, B 01 F 7/18,
B 01 F 7/22, B 01 F 7/02

(30) Priorité: 19.04.82 FR 8206803

(71) Demandeur: **Anetas, Jean, Zone Industrielle,
F-64240 Hasparren (FR)**

(43) Date de publication de la demande: 26.10.83
**Bulletin 83/43**

(72) Inventeur: **Anetas, Jean, Zone Industrielle,
F-64240 Hasparren (FR)**

(84) Etats contractants désignés: **BE CH DE GB IT LI NL**

(74) Mandataire: **Thebault, Jean-Louis, 3, rue du Professeur
Demons, F-33000 Bordeaux (FR)**

(54) **Perfectionnements aux broyeurs de lisiers.**

(57) L'invention concerne des perfectionnements aux broyeurs
à lisiers du type comprenant une hélice (4) entraînée par un axe
(1) lui-même entraîné en rotation par un moyen moteur approprié, caractérisé en ce que l'hélice comporte deux pales (7)
symétriques par rapport à l'axe d'entraînement (1), chaque
pale étant constituée d'une plaque mince trapézoïdale pliée suivant sensiblement une diagonale (8) du trapèze et fixée à une
extrémité (9) sur ledit axe (1) de façon que la ligne de pliage (8)
forme avec l'axe (1) un angle compris entre 25° et 45°.

Application au traitement du lisier.

EP 0 092 494 A1

- 1 -

## PERFECTIONNEMENTS AUX BROYEURS DE LISIERS

La présente invention se rapporte aux broyeurs de lisiers, c'est-à-dire des dispositifs destinés à malaxer et mélanger des constituants solides et liquides des excréments d'animaux.

En agriculture ou utilise couramment le lisier comme engrais. Ceci nécessite le stockage des excréments dans des cuves ou fosses puis leur pompage dans une tonne à lisier en vue de l'épandage dans les champs.

Au cours du stockage la partie liquide des excréments se sépare de la partie dure appelée bouse qui monte en surface.

Avant le pompage du lisier il est donc nécessaire d'homogénéiser l'ensemble à l'aide d'un broyeur-malaxeur que l'on plonge dans la fosse à lisier.

Il existe différents types d'appareils susceptibles d'effectuer cette opération, cependant la plupart ne permettent pas d'obtenir un malaxage-broyage efficace c'est-à-dire assurant une homogénéité acceptable dans la totalité de la masse du lisier.

Un tel problème se rencontre fréquemment dans le cas de fosses à lisiers couvertes ne possédant qu'un seul orifice d'accès.

Le but de la présente invention est précisément de proposer un broyeur à lisier particulièrement efficace et capable d'homogénéiser la masse entière du lisier d'une fosse sans avoir à déplacer l'appareil en différents endroits de la fosse.

A cet effet, l'invention a pour objet un broyeur à lisier du type comprenant une hélice entraînée par un axe lui-même entraîné en rotation par un moyen moteur approprié, caractérisé en ce que l'hélice comporte deux pales symétriques par rapport à l'axe d'entraînement, chaque pale étant constituée d'une plaque mince trapézoïdale pliée suivant sensiblement une diagonale du trapèze et fixée à une extrémité sur ledit axe de façon que la ligne de pliage forme avec l'axe un angle compris entre 25° et 45°.

Une telle forme d'hélice permet au broyeur, à partir d'une position de travail unique, d'assurer un malaxage et une homogénéisation efficaces de la totalité de la masse du lisier (parties solides et parties liquides) grâce à un puissant mouvement tourbillonnaire procuré par l'hélice.

D'autres caractéristiques et avantages ressortiront de la description qui va suivre d'un mode de réalisation du dispositif selon l'invention, description donnée à titre d'exemple uniquement et en regard du dessin annexé sur lequel :

- Fig. 1 représente une vue en coupe longitudinale schématique d'un broyeur à lisier conforme à l'invention ;
- Fig. 2 représente une vue de l'hélice du broyeur de la Fig. 1;
- Fig. 3a et 3b représentent une pale d'hélice avant et après pliage respectivement, et
- Fig. 4 représente une vue de l'extrémité du broyeur de la Fig. 1.

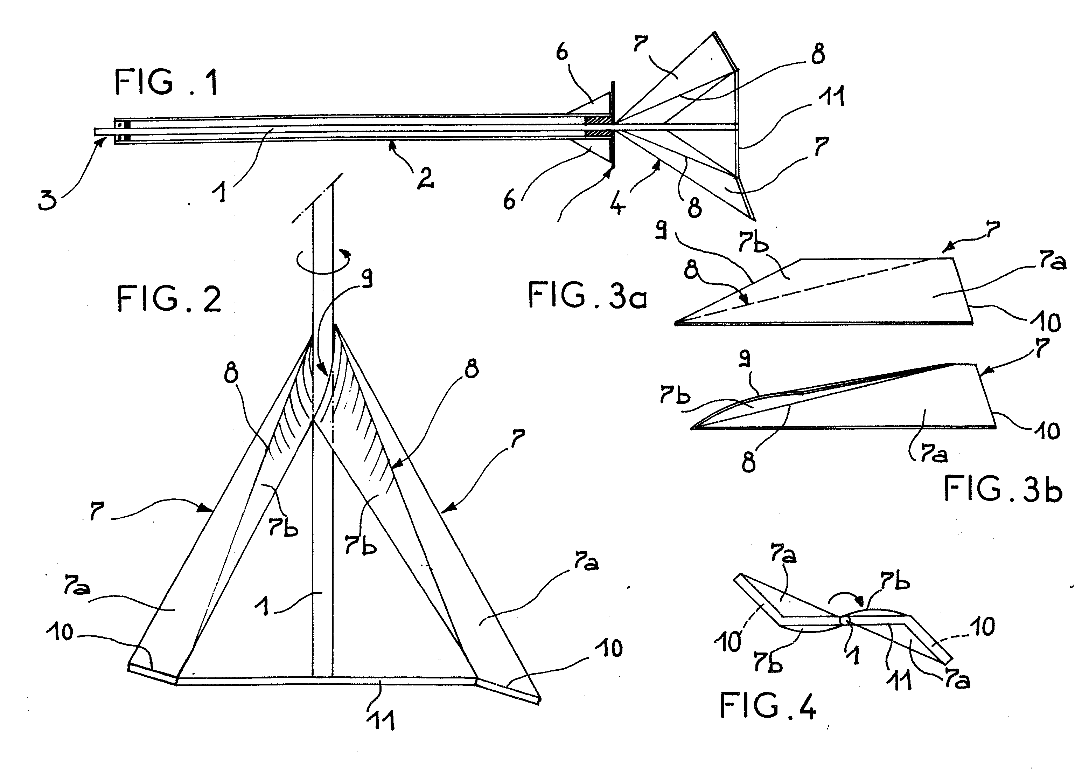

Le broyeur représenté schématiquement sur la Fig.1 comprend un axe 1 monté tourillonnant dans un tube 2, entraîné à l'une de ses extrémités 3 par un moyen moteur approprié (non représenté) et solidaire à son autre extrémité d'une hélice 4.

Sur l'axe 1 est également fixé entre l'hélice 4 et l'extrémité du tube 2 un couteau 5 de hâchage coopérant avec un contre-couteau fixé sur le tube 2 et constitué de deux pales triangulaires 6 disposées symétriquement.

Conformément à l'invention l'hélice 4 compte deux pales 7 identiques, disposées symétriquement par rapport à l'axe d'entraînement 1. Chaque pale 7 est formée à partir d'une plaque mince métallique plane (Fig. 3a) en forme de trapèze non-isocèle pliée suivant sensiblement une diagonale.

0092494

La ligne de pliage représentée en 8 sur le dessin sépare la pale en deux parties. L'une (partie 7a) comportant la grande base et un petit côté latéral demeure plane cependant que l'autre partie (7b) est légèrement cintrée comme on peut le remarquer sur la Fig. 3b.

Le plan moyen de cette partie 7b après pliage forme avec la partie plane 7a un angle de quelques degrés.

La partie 7b comprend le grand côté latéral 9 lequel se trouve légèrement arqué après pliage.

C'est ce côté 9 qui sera soudé (Fig. 2) sur l'axe 1 dont il épousera d'une manière générale le galbe.

L'inclinaison des pales 7 est telle que les lignes de pliage 8 font avec l'axe 1 un angle compris entre 25 et 45°, les deux pales 7 étant symétriquement disposées par rapport à l'axe 1.

Pour assurer une bonne fixation des pales 7 les petits côtés 10 des parties 7a sont soudés à un fer plat 11 de liaison lui-même fixé à l'extrémité de l'axe 1.

Le fer de liaison 11 a une forme générale de S (Fig. 4) pour tenir compte du fait que les côtés 11 des pales ne sont pas dans un même plan passant par l'axe 1 mais sont dans deux plans parallèles à égale distance de l'axe 1.

L'hélice 4 est entraînée en rotation dans le sens représenté sur les Fig. 2 et 4 par tout moyen approprié. Ce peut être un groupe moto-réducteur électrique ou à essence solidaire du tube 2, l'ensemble étant mobile et manoeuvré à la main ou bien monté articulé sur un axe pivotant monté dans un tube de maintien fixé à proximité de la fosse à lisier ou dans celle-ci.

Le moyen d'entraînement de l'axe 1 peut aussi être la prise de force d'un tracteur.

Le broyeur représenté et décrit ci-dessus est particulièrement efficace et permet en positionnant l'appareil de façon que l'axe 1 plonge dans la fosse sensiblement parallèlement à un côté de la fosse, au voisinage de celui-ci et avec un léger angle avec l'horizontale (30° par exemple), l'hélice se trouvant sensiblement à la limite de séparation des parties solides et liquides, d'obtenir rapidement une excellente homogénéisation de l'ensemble du lisier grâce à un puissant mouvement tourbillonnaire dans toute la fosse. Il n'est donc pas nécessaire de déplacer l'appareil et la totalité du lisier peut être alors pompé après un temps de malaxage réduit en comparaison avec les broyeurs connus.

Bien entendu, l'invention n'est pas limitée au mode de réalisation représenté et décrit ci-dessus mais en couvre au contraire toutes les variantes notamment en ce qui concerne les formes, dimensions et dispositions des pales 7 de l'hélice.

REVENDICATIONS
:=:=:=:=:=:=:=:=:=:=:=:=:=:

1. Broyeur à lisier du type comprenant une hélice (4) entraînée par un axe (1) lui-même entraîné en rotation par un moyen moteur approprié, caractérisé en ce que l'hélice comporte deux pales (7) symétriques par rapport à l'axe d'entraînement (1), chaque pale étant constituée d'une plaque mince trapézoïdale pliée suivant sensiblement une diagonale (8) du trapèze et fixée à une extrémité (9) sur ledit axe (1) de façon que la ligne de pliage (8) forme avec l'axe (1) un angle compris entre 25° et 45°.

2. Broyeur à lisier suivant la revendication 1, caractérisé en ce que la plaque constituant chaque pale (7) a une forme avant pliage d'un trapèze non-isocèle, la demi-partie (7a) incluant le petit côté latéral (10) demeurant plane tandis que l'autre demi-partie (7b) est légèrement cintrée, le côté (9) afférant à cette demi-partie étant appliqué contre la périphérie dudit axe (1) et soudé à celui-ci.

3. Broyeur à lisier suivant la revendication 2, caractérisé en ce que les petits côtés (10) des pales (7) se trouvent sensiblement dans un plan commun passant par l'extrémité de l'axe (1) et perpendiculaire à ce dernier, lesdits côtés (10) et l'extrémité de l'axe (1) étant réunis par un fer de liaison (11) en forme générale de S.

4. Broyeur à lisier suivant l'une des revendications 1 à 3 caractérisé en ce que l'axe d'entraînement (1) comporte au voisinage immédiat de la naissance des pales (7) un couteau (5) perpendiculaire audit axe (1) et coopérant avec un ou plusieurs contre-couteaux (6) fixes.

FIG.1

FIG.2

FIG.3a

FIG.3b

FIG.4

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-B-1 457 798  (ECKART) <br> * Figure 2 * <br><br> --- | 1 | B 01 F   15/00 <br> A 01 C   3/02 <br> B 01 F   7/16 <br> B 01 F   7/18 <br> B 01 F   7/22 |
| A | US-A-3 679 323  (BUCK) <br> * Figures 1-6 * <br><br> --- | 1-3 | B 01 F   7/02 |
| A | CH-A-  603 031  (GOAVEC) <br> * Figure 1 * <br><br> --- | 1-3 | |
| A | DE-B-1 204 000  (EGGERSGLUSS) <br> * Figures 1-3 * <br><br> --- | 1 | |
| A | GB-A-1 270 105  (TOMLINSON) <br> *  Page 2, lignes 73-79; figure 2 * <br><br> ----- | 4 | |

| | | DOMAINES TECHNIQUES RECHERCHES (Int. Cl. ³) |
|---|---|---|
| | | B 01 F <br> A 01 C |

*Le présent rapport de recherche a été établi pour toutes les revendications*

| Lieu de la recherche·<br>LA HAYE | Date d'achèvement de la recherche<br>21-06-1983 | Examinateur<br>AST W.O. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                                     & : membre de la même famille, document correspondant

OEB Form 1503. 03.82